(19)

Europäisches
Patentamt
European
Patent Office
Office européen
des brevets

(11) **EP 2 046 047 A1**

(12) **EUROPEAN PATENT APPLICATION**

(43) Date of publication:
**08.04.2009 Bulletin 2009/15**

(51) Int Cl.:
***H04N 7/26*** (2006.01)

(21) Application number: **07301432.6**

(22) Date of filing: **04.10.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Thomson Licensing
92100 Boulogne-Billancourt (FR)**

(72) Inventors:
• **Zou, Jilin
100085 Beijing (CN)**

• **Yang, Libo
100085 Beijing (CN)**
• **Chen, Zhi Bo
100085 Beijing (CN)**

(74) Representative: **Rittner, Karsten
Deutsche Thomson OHG
European Patent Operations
Karl-Wiechert-Allee 74
30625 Hannover (DE)**

(54) **Method and device for performing motion estimation**

(57)    In motion estimation, the number of search points should be kept low in order to accelerate the ME process, while the flexibility of the ME process should be improved and the complexity of the required hardware reduced. A method for performing motion estimation for a picture element selects an initial reference element having an initial distortion value, compares the initial distortion value with three different thresholds (TH1,TH2, TH3 with TH1<TH2<TH3), and depending on the results of the comparison, skips further search steps if the first threshold (TH1) is met, or performs a simple nearby search if not the first but the second threshold (TH2) is met, or performs a wider range search before said simple nearby search if also not the second threshold is met. The wider range search comprises selecting, depending on the third threshold (TH3), one among two different search patterns with horizontally different search ranges.

Fig.2

EP 2 046 047 A1

**Description**

Field of the invention

This invention relates to a method and a device for performing motion estimation, which is a sub-process within predictive video encoding.

Background

Motion estimation aims at determining for a current picture element, e.g. macroblock (MB), another picture element that shows similarities in terms of luminance/chrominance values and that will be decoded earlier, so that it can be used for reconstruction of the current picture element at the decoder. Usually the single pixels of the current and the previously encoded picture element are compared to each other, and the absolute difference values are calculated and added up. The sum, known as sum-of-absolute-differences (SAD), gives a measure for the similarity, or rather the distortion. This is because one of the previously encoded elements is chosen as reference for encoding the current picture element, where the encoding comprises defining the reference element, calculating the pixel differences or residual and encoding the residual. The definition of the reference element is usually done by a motion vector (MV) as result of a motion estimation (ME) process. The MV is then transmitted together with the residual.

Motion estimation is a very complex process that uses many search points. Conventional motion estimation therefore requires complex hardware or long processing time. Thus it is often limited with respect to the search range or processing time. Usually, a certain range around the corresponding picture element of a previous picture is defined as search area. In "Predictive block matching discrepancy based rhombus pattern search for block motion estimation", IEEE 2005, Jang-Jer Tsai and Hsin-Chia Chen apply a threshold to the minimum of zero-MV (ZMV) and predicted MV (PMV), and also to all further search points in subsequent searches. If a distortion value or SAD is below the threshold, the search is terminated.

Though numerous other fast algorithms have been proposed to improve the speed of ME, including three step search, four step search, diamond search and hexagon-based search, they still can't meet the requirements of real-time applications by software. Thus, also an optimized hardware structure is desirable.

Summary of the Invention

It is desirable to accelerate the ME process. On the other hand, the flexibility of the ME process should be improved. It is particularly desirable to find a solution that achieves both these goals. The present invention as disclosed in claim 1 provides such solution.

Basically, the number of search points is a criterion of fast ME algorithm. Therefore the present invention reduces the search points as much as possible while maintaining performance degradation acceptable. Besides, data reuse and I/O bandwidth have also been considered for complexity evaluation in hardware implementation.

According to the invention, a method for performing motion estimation for a current picture element comprises steps of

selecting an initial reference element based on a first initial motion vector and having an initial distortion value when compared with the current picture element,

comparing the initial distortion value with different first, second and third thresholds, wherein subsequent thresholds indicate more distortion than previous, and

depending on the results of the comparison skipping further search steps if the first threshold is met (i.e. initial distortion is below a minimum), or performing a simple nearby search, e.g. diamond search or rhombus search, if not the first but the second threshold is met, or performing a wide search before said simple nearby search if also not the second threshold is met, wherein the wide search comprises selecting, depending on the third threshold, one among two different search patterns with horizontally different search ranges.

In one embodiment, the step of selecting an initial reference element comprises steps of

calculating a first distortion value for a first position based on a first initial motion vector, e.g. zero MV, calculating a second distortion value for a second position based on different a second initial motion vector, e.g. a predicted motion vector either from a previous picture or neighbor blocks, and

selecting among the first and second position the one that better matches the picture element, based on said first and second distortion values. The corresponding distortion value is then selected as initial distortion value.

In one embodiment, the method further comprises steps of determining that the wider range search yields a position with lower distortion than the initial distortion value,

selecting the position with lowest distortion as new search centre,

performing an additional horizontal hexagon search around the new search centre, and

selecting as updated new search centre for the final simple nearby search the position with the lowest distortion value.

Further, it is also desirable to reduce the complexity of the required hardware.

According to another aspect of the invention, pairs of horizontally adjacent search points can be processed simultaneously. For this purpose, the ME hardware may be doubled. This feature reduces the number of processing cycles for a given number of search points drastically. It is particularly advantageous to use horizontally neighbouring search points, since this makes it easier to implement search patterns with horizontal range higher than vertical range, which reflects the higher probability of horizontal motion within natural video scenes.

According to one aspect of the invention, a device for performing motion estimation for a current picture element comprises

means for selecting an initial reference element based on a first initial motion vector, the initial reference element having an initial distortion value when compared with the current picture element,

means for comparing the initial distortion value with different first, second and third thresholds, wherein subsequent thresholds indicate more distortion than previous,

means for skipping further search steps if the first threshold is met (i.e. initial distortion is below a minimum),

means for performing a simple nearby search, e.g. diamond search or rhombus search, if not the first but the second threshold is met, and

means for performing a wide range search before said simple nearby search if also not the second threshold is met, wherein the means for performing a wide range search comprises means for selecting, depending on the third threshold, one among two different search patterns with horizontally different search ranges.

In one embodiment, the means for selecting an initial reference element comprises

means for calculating a first distortion value for a first position based on a first initial motion vector, e.g. zero MV,

means for calculating a second distortion value for a second position based on different a second initial motion vector, e.g. a predicted motion vector either from a previous picture or neighbor blocks, and

means for selecting among the first and second position the one that better matches the picture element, based on said first and second distortion values. The corresponding distortion value is then selected as initial distortion value by a selection means.

In one embodiment, the device further comprises

means for determining that the wider range search yields a position with lower distortion than the initial distortion value, means for selecting the position with lowest distortion as new search centre,

means for performing an additional horizontal hexagon search around the new search centre, and

means for selecting as updated new search centre for the final simple nearby search the position with the lowest distortion value.

Each of the above-mentioned means may be software means or hardware means.

Advantageous embodiments of the invention are disclosed in the dependent claims, the following description and the figures.

Brief description of the drawings

Exemplary embodiments of the invention are described with reference to the accompanying drawings, which show in

Fig.1 the framework of a video compression system;

Fig.2 a flowchart of the general motion estimation process according to the invention;

Fig.3 the generation of the initial predicted MV;

Fig.4 a typical small diamond refinement process;

Fig.5 a flowchart of an enhanced motion estimation process according to the invention;

Fig.6 extended hexagon search patterns;

Fig.7 a block diagram of a processing element for parallel processing of two adjacent search points; and

Fig.8 an exemplary hardware architecture of the fast motion estimation unit.

Detailed description of the invention

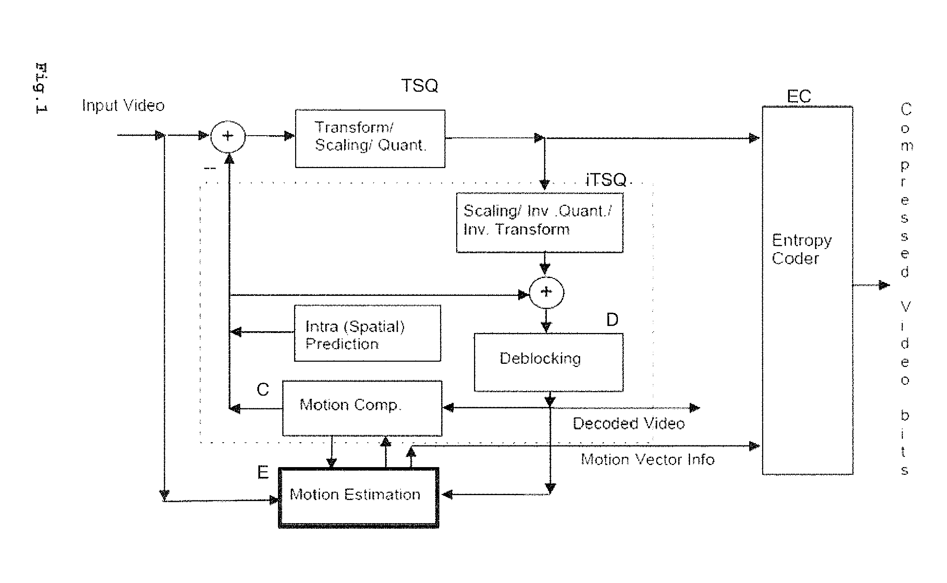

Fig.1 shows the framework of a video compression system. The motion estimation block is the heart of the video compression system, and it is also useful in some modules of video pre-analysis like complexity analysis, ROI (region of interest) extraction, true motion detection, etc. However, the computational complexity of ME is pretty high, which often prevents it from real-time applications. Although most of the available ME algorithms improve the speed of ME greatly, they still can't meet the requirements of real-time applications by software. It is necessary to introduce hardware implementation to further speed up the ME process, but these fast ME algorithms rarely address hardware implementation constraints. A good fast ME algorithm can improve search speed by reducing search points, decreasing data throughput and storage.

In a general video compression system framework, an input video frame is compared with a reconstructed, previously encoded video frame, and the difference or residual is transformed, scaled and quantized TSQ. Then the encoder performs inverse quantization, inverse scaling, inverse transforming iTSQ and deblocking D, in order to reconstruct a video frame for the next prediction. The reconstructed frame is motion compensated C, wherein MVs are applied to obtain a temporal prediction, and the result is used as reference for the next frame. The entropy coder EC encodes the transformed, scaled and quantized input video and the MVs, which is sufficient for the decoder to reconstruct the original video. The better the ME process works, the higher is the compression efficiency of the whole encoding process. Therefore it is vital to find the best matching reference block for any current MB. This requires usually very complex computations.

To reduce the computational complexity of ME in a hardware (HW) implementation, this invention provides a compact fast ME approach with low memory bandwidth and fast search speed. Memory bandwidth is important since the reference data must usually be retrieved from external memories, which takes time. A simplified search pattern and early termination is used. The computational load can further be reduced by utilizing a parallel processing architecture. The sum-of-absolute-differences (SAD) of two adjacent search positions (preferably horizontal, but in principle also vertical) can be calculated simultaneously, therefore the "HW equivalent" average number of search points can be further reduced. Compared with full search algorithm (search range $\pm 32$ pixel, integer search, the number of full search points per MB is 65x65=4225), the disclosed method can reduce the search points to 8.4 (from processing time or HW equivalent point of view: one effective search pair can be considered as one search point, which can be executed simultaneously), with a maximum average PSNR degradation of 0.05dB and max. bit rate increase of 3.3%. In the fast ME architecture, there are less, e.g. only 32, cycles to finish the SAD calculation of one MV with a 64 bit data bus. The PSNR performance of the new algorithm is suitable for video compression, and its HW architecture is small and fast.

In one aspect, owing to a novel memory scheme for video data in the search area, parallel processing on the two adjacent search positions is possible without additional HW resource, thus improving the speed of ME greatly. In our algorithm, two novel search patterns are provided that are particularly suitable for HW implementation. Generally, because of the algorithmic and architecture co-design of motion estimation, the proposed hardware-oriented fast ME approach has small area and fast search speed, and also good quality performance.

In one embodiment, the proposed fast ME algorithm includes initial predictive search, adaptive extended hexagon search, small diamond search refinement and early termination.

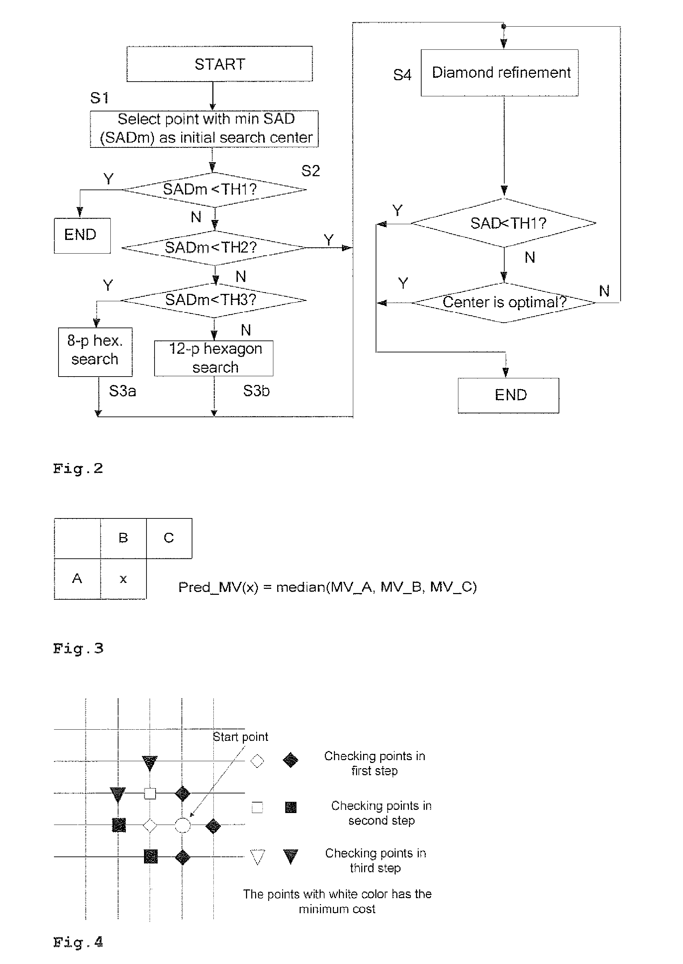

This is shown in Fig.2. The first motion estimation step S1 is the selection of an initial reference block, having an initial distortion value in comparison with the current MB. The initial reference block is defined by an initial motion vector. The initial starting search point is very important for the search process. It affects the ME process greatly. In principle, any MV prediction method can be used in this step. Preferably, the step may include selection of an easily obtainable standard value, e.g. the Zero vector (0,0) ZMV, meaning that the reference for a MB at position x,y is the MB at the same position x,y in previous picture. It may also include a simple choice between two or more easily obtainable values, e.g. Zero vector ZMV or standard predicted motion vector (Pred_MV_x, Pred_MV_y) PMV, which exploits the spatial correlation of MVs within a frame. In this embodiment, zero vector (0,0) ZMV and predicted motion vector PMV are checked respectively as initial search points, and the one with smaller matching error is selected as the starting point for the following ME procedure.

The predicted MV (Pred_MV_x, Pred_MV_y) is e.g. the median value of the MVs of neighbour blocks, as shown in Fig.3.

The next step S2 comprises comparing the initial distortion value with different first, second and third thresholds TH1,TH2,TH3, wherein subsequent thresholds mean more distortion than previous. That is, the first comparison is initial distortion value SADm against TH1, the second comparison SADm against TH2 the third comparison SADm against TH3, with TH1<TH2<TH3. It is not necessary that all comparisons are executed, e.g. if "SADm<TH1" is true then the subsequent comparisons can be skipped. It is also possible to execute all three comparisons in a single multi-branch selection, according to e.g.
switch (SADm)

```
case (SADm < TH1) { ... // 1st branch: SADm<TH1}


case (SADm < TH2) { ... // 2nd branch: TH1≤SADm<TH2}


case (SADm < TH3) { ... // 3rd branch: TH2≤SADm<TH3}


default          { ... // 4th branch: TH3≤SADm}
```

Depending on the results of the comparison, further search steps are skipped if the first threshold TH1 is met (i.e. if SADm<TH1), or a simple nearby search is performed if not the first but the second threshold is met (TH1≤SADm<TH2), or a wider range search S3A,S3B is performed before said simple nearby search if also not the second threshold is met (i.e. TH2≤SADm). The wider range search comprises selecting, depending on the third threshold TH3, one among two different search patterns S3A,S3B with horizontally different search ranges, as described below.

SAD is adopted as the measurement of matching error, though also another distortion measure can be used. If SAD is less than a given first threshold TH1, all of the following search process is skipped to reduce the complexity while keeping the image quality high.

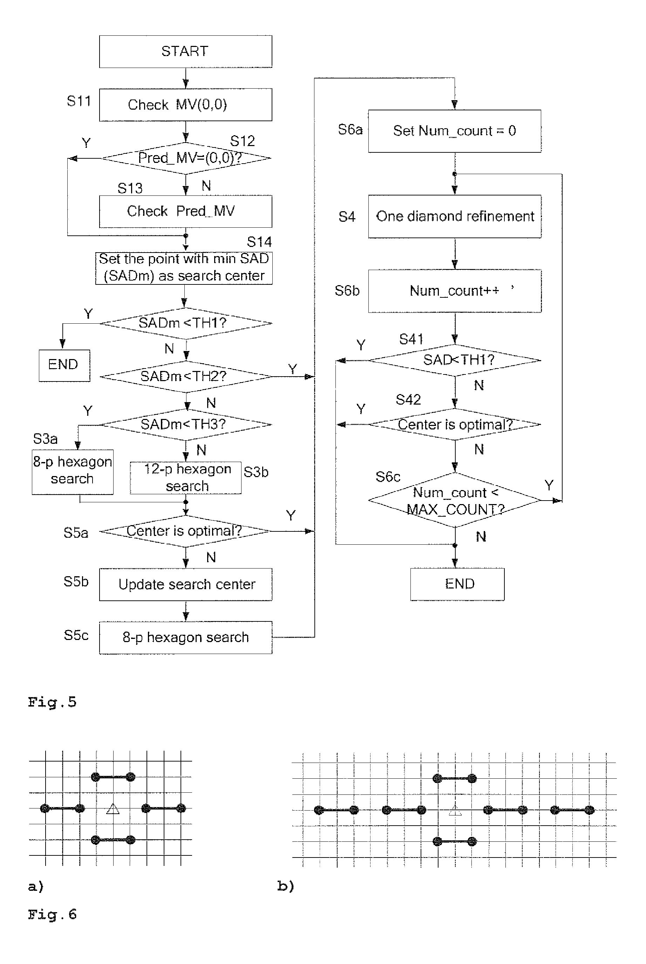

For the wider range search, a horizontal hexagon type of search pattern is advantageous, which basically means that the search points cover a wider range in horizontal than in vertical direction, with the maximum range at current line (Δy=0) so that the outer shape of the pattern is a hexagon. The number of search points on the current line should be at least twice the number of search points on any other line. This takes account of the fact that plain horizontal motion appears very often, and has therefore a better chance to be detected. However, the algorithm may also be optimized for vertical motion in other applications than natural video. Examples of horizontal hexagon patterns are shown in Fig.6.

Fig.6 a) shows an extended horizontal 8-p hexagon search pattern. Exemplarily, four pairs of horizontally adjacent search points are shown that are simultaneously processed by a doubled HW structure, as proposed by one aspect of the invention. The search points may however as well be processed in a single manner. Fig.6 b) shows a 12-p hexagon search pattern, which is horizontally even wider, and thus optimized for detecting faster horizontal motion.

Returning now to Fig.3, a simple nearby search S4 is performed unless the first threshold TH1 was met. At this point, the best position that was found so far is selected as search centre. The nearby search is usually a so-called diamond search, which checks the direct neighbor pixels in the reference image. This step is terminated as soon as the distortion value of a current search point is below the above-mentioned first threshold TH1, since this is the best criterion for a picture element that is sufficiently similar to provide a good prediction. On the other hand, this step is terminated if the centre of the diamond is the optimal position, i.e. if all search points around the center have higher distortion values.

Additionally, in one embodiment that is shown in Fig.5 another termination criterion for this step may be that a maximum number of search points have been processed S6a, S6b,S6c.

In one embodiment, as also shown in Fig.5, it is possible to perform an additional hexagon search before the final diamond search, in order to update the search centre in the case that the search centre that was used for the wider range searches S3a,S3b is not optimal. This means that at least one of the checked hexagon search positions of Fig.6 has a lower distortion value than the search centre, which is indicated by a triangle in Fig.6. In this embodiment, the optimal search centre is determined S5a and updated S5b, and an additional hexagon search is performed S5c around the updated search centre.

Fig.5 shows a flowchart according to an embodiment of an enhanced version of the proposed ME method. The whole algorithm can be decomposed into the following steps:

First, check the ZMV (0,0) and the predicted MV (one search point is checked if PMV equals to ZMV). Set the one with the minimum distortion/matching error SADm as the search centre of the following steps.

Second, if SADm is less than TH1, skip all the following ME process; otherwise, if SADm is less than TH2, skip all the hexagon search and go to diamond refinement directly; otherwise, if SADm is less than TH3, perform 8-p hexagon search of Fig.6 a). Otherwise, choose 12-p hexagon search of Fig.6 b).

Among all the search points (8 or 12) of hexagon pattern and the central point, if the central point is the optimal point (with the minimum SAD), then go to the diamond refinement directly. Otherwise, set the point with minimum SAD as the new search centre and perform an additional 8-point hexagon search.

Finally, perform the small diamond refinement. Terminate the refinement process when any of the following conditions is satisfied: (1) The SAD of any search point is less than TH1; (2) the search point with the minimum SAD locates in the diamond centre; or (3) the number of iterations reaches MAX_COUNT.

A typical small refinement process is shown in Fig.4. From the start point shown as circle, the upper, left, lower and right neighbour points are checked, and the best is selected. Exemplarily, it is the left point in Fig.4.

Therefore this point is selected as new search centre for the second step. In the second step, the upper, left, lower and right neighbour points of the new search centre are checked, wherein however the initial starting point of the first step is skipped because it was already checked. In Fig.4, exemplarily the upper neighbour point of the new search centre is best. It is selected as new search centre. Again, in a third step the left, lower and right neighbour points of the new search centre are checked, wherein previously points are skipped. Since this process may continue very long, it can be limited by counting the steps or SAD calculations and terminating after reaching a maximum number.

In the following, the above mentioned consequences of the results of said comparison with first, second and third thresholds are described in more detail.

If the initial distortion value is below the first threshold, the corresponding MV is selected as final MV, and the ME process for said picture element is terminated.

Otherwise, if the initial distortion value is below the second threshold, the corresponding position is selected as initial search centre, and the ME process continues with the step of performing the simple nearby search, so that the step of performing a wide search (such as hexagon search) is skipped.

Otherwise, if the initial distortion value is not below the second threshold then a wider search is performed. In this case, two different wider search options exist which differ in the range that they cover: If the initial distortion value is below the third threshold, a first wider range search is performed with a smaller horizontal hexagon pattern, and a first hexagon distortion value is determined. If the initial distortion value is not below the third threshold, a second wider range search is performed with a larger horizontal hexagon, and a second hexagon distortion value is determined.

Instead of the horizontal hexagon pattern for the wider range search, it may also be a similar horizontal pattern, as long as the horizontal range is higher than the vertical range. This has the advantage that the properties of natural video scenes are better matched, where horizontal motion is more probable than vertical.

Among the initial, the first and the second hexagon distortion values, the best position is selected as new search centre. Finally, a diamond search is performed around the selected new search centre. The diamond search may be small, e.g. four points (upper, lower, left, right).

If the distortion value of any search point is below the above-mentioned first threshold, or the best distortion value is found in the centre of said diamond search, then the respective motion vector is selected as final motion vector and the ME process is terminated.

In one embodiment, the number of iterations (or different search positions) is counted and the motion estimation may also be terminated if the number of iterations reaches a predefined maximum value. Then the best determined position (having minimum distortion value) and corresponding motion vector is selected as final position and motion vector.

In one embodiment, an additional step before the diamond search step comprises if the new search centre after said first or second hexagon search is different from the initial search centre, performing an additional hexagon search around the new search centre, and selecting as updated new search centre the best position, based on the additional hexagon search distortion values. Then the final diamond search may also be performed around this updated new search centre.

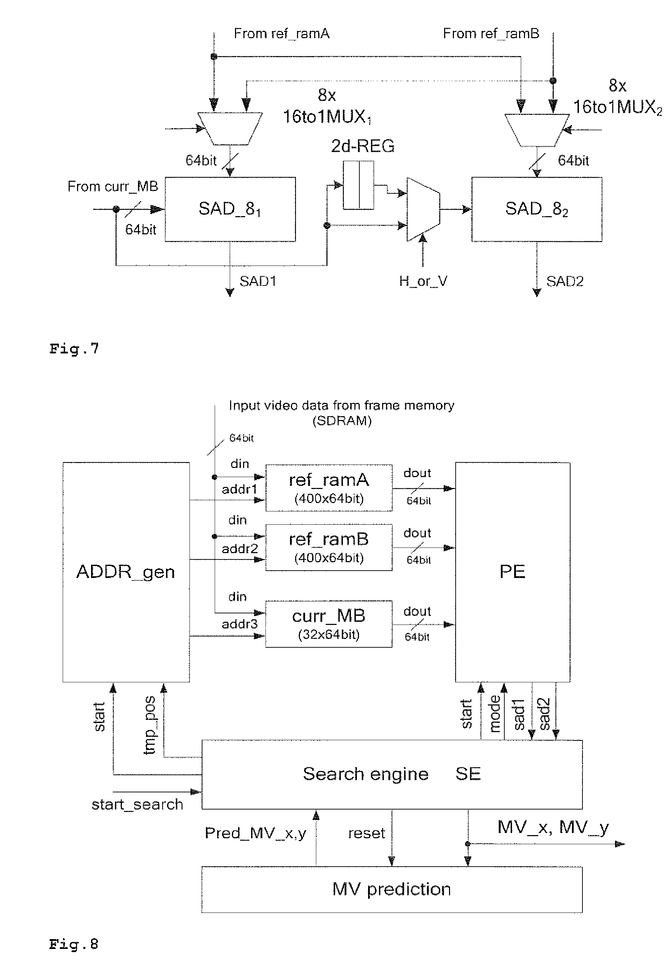

In one embodiment, horizontal pairs of search points are processed simultaneously. An exemplary block diagram of a processing element is shown in Fig.7. Two computation units SAD_81,SAD_82 simultaneously compare the current MB with two different reference MBs adjacent to each other. For vertical motion however it is necessary to delay the input data with a pipeline 2d-REG, since the architecture is optimized for horizontal motion, as explained above. The MV prediction module gives the predicted motion vector from the neighbour MBs, while the MV of MBs of the previous line are stored circularly for calculating the predicted MV. Three 64 bit single port SRAMs are used: two (ref_ramA and ref_ramb) store the data of reference frame in the search area (search range $\pm$32pixel), and one (curr_MB) stores the video data of current MB. This memory scheme allows for data reuse and reduces the need to reload the same reference data from the external frame memory, which would take more time.

In Fig.8, the address generator module Addr_gen generates the SRAM read addresses based on the candidate search position signal from search engine module SE. The search engine module SE is a kernel algorithm module, which decides the next candidate search position by search pattern and the two result SADs from the processing element module PE. This module PE includes two sub processing units, which can compute the sum-of-absolute-differences (SAD) of two adjacent candidate positions (vertical or horizontal) simultaneously. With a 64 bit data bus, the SAD of 8 pixels can be calculated in one cycle, so that the SAD of a MB can be finished in 32 cycles. For computing two vertical positions, total time is 36 cycles because of the delay register. Each computation unit SAD_81,SAD_82 can calculate the SAD of 8 pixels at the same time.

In hardware implementations, it may be useful if the first, second and third thresholds are software programmable. In this case the hardware can be used in a more flexible manner. Reasonable SAD values for the thresholds are e.g. 256 for TH1, 768 for TH2 and 2048 for TH3 for average video sequences. Advantageously, the values may be changed for different types of sequences, e.g. for faster motion and/or stronger textures. Thus, higher flexibility is given.

Thus, according to one aspect of the invention, a method for performing motion estimation for a picture element comprises the steps of

calculating a first distortion value for a first position based on a first initial motion vector, e.g. zero MV,

calculating a second distortion value for a second position based on different a second initial motion vector, e.g. a predicted motion vector either from previous picture or neighbor blocks,

selecting among the first and second position the one that better matches the picture element, based on said first and second distortion values, wherein the corresponding distortion value is the initial distortion value,

comparing the initial distortion value with different first, second and third thresholds, wherein subsequent thresholds are higher than previous,

if the initial distortion value is below the first threshold, selecting the corresponding MV as final MV and terminating the motion estimation for said picture element;

otherwise, if the initial distortion value is below the second threshold, selecting the corresponding position as initial search centre, skipping the following steps of performing first or second hexagon search and continuing with the step of performing diamond search,

otherwise, if the initial distortion value is not below the second threshold but below the third threshold, performing a first horizontal hexagon search and determining first hexagon distortion values,

otherwise, if the initial distortion value is not below the second threshold and not below the third threshold, performing a different second horizontal hexagon search and determining second hexagon distortion values,

selecting as new search centre the best position based on the initial and the first or second hexagon distortion values, performing a diamond search around said initial or new search centre, depending on the previous step; and

if the distortion value of any search point is below the first threshold, or the best distortion value is found in the centre of said diamond search, then selecting the respective motion vector as final motion vector and terminating the motion estimation. The diamond search may be small, e.g. four points (upper, lower, left, right).

Additionally, it may be advantageous to perform after the step of performing a diamond search around said initial or new search centre following further steps:

> if the new search centre is different from the initial search centre, performing an additional hexagon search around the new search centre,
>
> selecting as updated new search centre the best position based on the initial and the additional hexagon search distortion values, and
>
> performing a (small) diamond search around said initial or new search centre, depending on the previous step.

It will be understood that the present invention has been described purely by way of example, and modifications of detail can be made without departing from the scope of the invention.

Each feature disclosed in the description and (where appropriate) the claims and drawings may be provided independently or in any appropriate combination. Features may, where appropriate be implemented in hardware, software, or a combination of the two. Reference numerals are by way of illustration only and shall have no limiting effect on the scope of the claims.

**Claims**

1. A method for performing motion estimation for a picture element, comprising the steps of

> - selecting (S1), based on an initial motion vector, an initial reference element having an initial distortion value in comparison with the current picture element;
> - comparing (S2) the initial distortion value with different first, second and third thresholds (TH1, TH2,TH3), wherein subsequent thresholds mean more distortion than previous; and
> - depending on the results of the comparison, skipping further search steps if the first threshold (TH1) is met, or performing a simple nearby search (S4) if not the first but the second threshold (TH2) is met, or performing a wider range search (S3a,S3b) before said simple nearby search if also not the second threshold is met, wherein the wider range search comprises selecting, depending on the third threshold (TH3), one among two different search patterns (S3a,S3b) with horizontally different search ranges.

2.  Method according to the previous claim, further comprising the steps of

    - determining (S5a) that the wider range search (S3a,S3b) yields a position with lower distortion than the initial distortion value;
    - selecting (S5b) the position with lowest distortion as new search centre;
    - performing (S5c) an additional horizontal hexagon search around the new search centre; and
    - selecting (S5c) as updated new search centre for the final simple nearby search the position with the lowest distortion value.

3.  Method according to claim 1 or 2, wherein the step of selecting an initial reference element comprises steps of

    - calculating (S11) a first distortion value for a first position based on a first initial motion vector;
    - calculating (S12,S13) a second distortion value for a second position based on different a second initial motion vector; and
    - selecting (S14) among the first and second position the one that better matches the picture element, based on said first and second distortion values, wherein the corresponding distortion value is selected as initial distortion value.

4.  Method according to one of the claims 1-3, wherein the wider range search is a hexagon search and the simple nearby search is a diamond or rhombus search.

5.  Method according to claim 4, wherein the two search patterns with horizontally different search ranges of the wider range search are hexagon patterns with 8 and 12 points respectively.

6.  Method according to one of the claims 1-5, wherein at least two horizontally adjacent search points are processed simultaneously.

7.  Method according to one of the claims 1-6, wherein the number of iterations within the nearby search is counted (S6a) and used as a criterion (S6c) for terminating the search process.

8.  A device for performing motion estimation for a picture element, comprising

    - means for selecting, based on an initial motion vector, an initial reference element having an initial distortion value in comparison with the current picture element;
    - means for comparing the initial distortion value with different first, second and third thresholds, wherein subsequent thresholds mean more distortion than previous; and
    - means for skipping further search steps if the first threshold is met, depending on the results of the comparison;
    - means for performing a simple nearby search if not the first but the second threshold is met;
    - means for performing a wider range search before said simple nearby search if also not the second threshold is met, wherein the means for performing a wider range search comprises means for selecting one among two different search patterns with horizontally different search ranges, depending on the third threshold,.

9.  Device according to the claim 8, further comprising

    - means for determining that the wider range search yields a position with lower distortion than the initial distortion value;
    - means for selecting the position with lowest distortion as new search centre;
    - means for performing an additional horizontal hexagon search around the new search centre; and
    - means for selecting as updated new search centre for the final simple nearby search the position with the lowest distortion value.

10. Device according to claim 8 or 9, wherein the first, second and third thresholds are software programmable.

Fig. 1

START

S1

Select point with min SAD
(SADm) as initial search center

Y ← SADm < TH1? S2

N

END

Y ← SADm < TH2? → Y

N

Y ← SADm < TH3?

N

8-p hex.
search

12-p hexagon
search

S3a            S3b

S4 | Diamond refinement

Y ← SAD < TH1?

N

Y ← Center is optimal? → N

END

**Fig.2**

|   | B | C |
|---|---|---|
| A | x |   |

Pred_MV(x) = median(MV_A, MV_B, MV_C)

**Fig.3**

Start point

◇ ◆ Checking points in
first step

☐ ◼ Checking points in
second step

▽ ▼ Checking points in
third step

The points with white color has the
minimum cost

**Fig.4**

START

S11  Check  MV(0,0)

S12  Y ← Pred_MV=(0,0)?
S13  N
Check  Pred_MV

S14
Set the point with min SAD (SADm) as search center

Y ← SADm <TH1?
END   N
Y ← SADm <TH2?
N
Y ← SADm<TH3?
S3a   N
8-p hexagon search   12-p hexagon search  S3b

S5a  Y ← Center is optimal?
N
S5b  Update search center
S5c  8-p hexagon search

S6a  Set Num_count = 0

S4  One diamond refinement

S6b  Num_count++

S41  Y ← SAD<TH1?
N
S42  Y ← Center is optimal?
N
S6c  Num_count < MAX_COUNT?  Y
N
END

Fig.5

a)                              b)

Fig.6

From ref_ramA       From ref_ramB

8x
16to1MUX₁

8x
16to1MUX₂

64bit

64bit

From curr_MB

64bit

SAD_8₁

2d-REG

SAD_8₂

SAD1

H_or_V

SAD2

**Fig.7**

Input video data from frame memory
(SDRAM)

64bit

din

ADDR_gen

addr1

ref_ramA
(400x64bit)

dout

64bit

din

addr2

ref_ramB
(400x64bit)

dout

64bit

PE

din

addr3

curr_MB
(32x64bit)

dout

64bit

start

tmp_pos

start

mode

sad1

sad2

start_search

Search engine     SE

Pred_MV_x,y

reset

MV_x, MV_y

MV prediction

**Fig.8**

**European Patent Office**

**EUROPEAN SEARCH REPORT**

Application Number

EP 07 30 1432

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XI ET AL: "A fast block-matching algorithm based on adaptive search area and its VLSI architecture for H.264/AVC" SIGNAL PROCESSING. IMAGE COMMUNICATION, ELSEVIER SCIENCE PUBLISHERS, AMSTERDAM, NL, vol. 21, no. 8, 1 September 2006 (2006-09-01), pages 626-646, XP005651662 ISSN: 0923-5965 * page 631 - page 632; figures 4,5 * * pages 627-628, paragraph 2.1. * * page 638, lines 16-18, paragraph 3.1. * | 1,3-8,10 | INV. H04N7/26 |
| Y | | 2,9 | |
| X | SHU-FA LIN ET AL: "Fast Multi-Frame Motion Estimation for H.264 and Its Applications to Complexity-Aware Streaming" CIRCUITS AND SYSTEMS, 2005. ISCAS 2005. IEEE INTERNATIONAL SYMPOSIUM O N KOBE, JAPAN 23-26 MAY 2005, PISCATAWAY, NJ, USA,IEEE, 23 May 2005 (2005-05-23), pages 1505-1508, XP010815804 ISBN: 978-0-7803-8834-5 * page 1506, lines 45-47, paragraph 1-3; figures 3-5 * * page 1507, lines 4-10 * | 1,3-8,10 | |
| Y | MORADI A. ET AL: "Enhanced cross-diamond-hexagonal search algorithms for fast block motion estimation" ADVANCED VIDEO AND SIGNAL BASED SURVEILLANCE AVSS, 15 September 2005 (2005-09-15), pages 558-563, XP002488063 * pages 558-559; figure 2 * | 2,9 | |

TECHNICAL FIELDS SEARCHED (IPC)

H04N

-/--

The present search report has been drawn up for all claims

| Place of search | Date of completion of the search | Examiner |
|---|---|---|
| Munich | 15 July 2008 | Le Guen, Benjamin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 30 1432

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 519 353 B1 (OGURA EIJI [JP]) 11 February 2003 (2003-02-11) ABSTRACT * column 5 * | 1-10 | |
| D,A | JANG-JER TSAI ET AL: "Predictive Block-Matching Discrepancy Based Rhombus Pattern Search for Block Motion Estimation" IMAGE PROCESSING, 2005. ICIP 2005. IEEE INTERNATIONAL CONFERENCE ON GENOVA, ITALY 11-14 SEPT. 2005, PISCATAWAY, NJ, USA,IEEE, vol. 1, 11 September 2005 (2005-09-11), pages 1073-1076, XP010851008 ISBN: 978-0-7803-9134-5 * page 1075 * | 1-10 | |

TECHNICAL FIELDS SEARCHED (IPC)

The present search report has been drawn up for all claims

| Place of search | Date of completion of the search | Examiner |
|---|---|---|
| Munich | 15 July 2008 | Le Guen, Benjamin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 30 1432

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2008

| Patent document cited in search report | Publication date | Patent family member(s) | Publication date |
|---|---|---|---|
| US 6519353 B1 | 11-02-2003 | JP 2000078580 A | 14-03-2000 |

For more details about this annex : see Official Journal of the European Patent Office, No. 12/82